(19) Europäisches Patentamt / European Patent Office / Office européen des brevets

(11) **EP 2 566 617 B1**

(12) **FASCICULE DE BREVET EUROPEEN**

(45) Date de publication et mention de la délivrance du brevet:
**26.03.2014 Bulletin 2014/13**

(21) Numéro de dépôt: **11716577.9**

(22) Date de dépôt: **02.05.2011**

(51) Int Cl.:
*B01J 23/00* (2006.01)     *B01J 23/10* (2006.01)
*B01J 23/63* (2006.01)     *B01J 37/00* (2006.01)
*B01J 37/03* (2006.01)     *B01J 37/10* (2006.01)
*B01J 35/10* (2006.01)     *B01D 53/92* (2006.01)
*C01F 17/00* (2006.01)     *C01G 25/00* (2006.01)

(86) Numéro de dépôt international:
**PCT/EP2011/056907**

(87) Numéro de publication internationale:
**WO 2011/138255 (10.11.2011 Gazette 2011/45)**

(54) **COMPOSITION A BASE D'OXYDES DE ZIRCONIUM, DE CERIUM ET D'AU MOINS UNE AUTRE TERRE RARE, A POROSITE SPECIFIQUE, PROCEDE DE PREPARATION ET UTILISATION EN CATALYSE**

ZUSAMMENSETZUNG MIT OXIDEN AUS ZIRKONIUM, CER UND MINDESTENS EINER ANDEREN SELTENEN ERDE MIT SPEZIFISCHER POROSITÄT, HERSTELLUNGSVERFAHREN DAFÜR UND VERWENDUNG FÜR KATALYSATOREN

COMPOSITION CONTAINING OXIDES OF ZIRCONIUM, CERIUM AND AT LEAST ONE OTHER RARE EARTH AND HAVING A SPECIFIC POROSITY, METHOD FOR PREPARING SAME AND USE THEREOF IN CATALYSIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2010 FR 1001947**

(43) Date de publication de la demande:
**13.03.2013 Bulletin 2013/11**

(73) Titulaire: **Rhodia Operations**
**93300 Aubervilliers (FR)**

(72) Inventeurs:
• **IFRAH, Simon**
  **F-17140 Lagord (FR)**
• **LARCHER, Olivier**
  **17180 PERIGNY (FR)**

(74) Mandataire: **Dubruc, Philippe**
**Rhodia Operations**
**Propriété Industrielle**
**40 rue de la Haie-Coq**
**93306 Aubervilliers Cedex (FR)**

(56) Documents cités:
• H. HE , H. X. DAI AND C. T. AU: "DEFECTIVE STRUCTURE, OXYGEN MOBILITY, OXYGEN STORAGE CAPACITY, AND REDOX PROPERTIES OF RE-BASED (RE = CE, PR) SOLID SOLUTIONS", CATALYSIS TODAY, vol. 90, no. 3-4, 1 juillet 2004 (2004-07-01), pages 245-254, XP002610100, DOI: 10.1016/j.cattod.2004.04.033
• ZHAO MING ET AL: "Application of cerium zirconium composite oxide in catalyst for motorcycle exhaust treatment", XIYOU JINSHU CAILIAO YU GONGCHENG - RARE METAL MATERIALS ANDENGINEERING, XIBEI YOUSE JINSHU YANJIUYUAN, BAOJI, CN, vol. 36, no. suppl. 3, 1 septembre 2007 (2007-09-01), pages 277-281, XP009141314, ISSN: 1002-185X
• MAO XIAO-BO ET AL: "High performance Ce0.35Zr0.55Y0.1O1.95 rare earth oxygen storage material", CHINESE JOURNAL OF INORGANIC CHEMISTRY / WU JI HUA XUE XUE BAO, CHINESE ELECTRONIC PERIODICAL SERVICES, CN, vol. 22, no. 8, 1 août 2006 (2006-08-01), pages 1521-1524, XP009141313, ISSN: 1001-4861

EP 2 566 617 B1

EP 2 566 617 B1

- SHEN MEI ET AL: "Influence of surfactant on performance of CeZrYO oxygen storage material", CUIHUA XUEBAO - JOURNAL OF CATALYSIS, BEIJING, CN, vol. 28, no. 12, 1 décembre 2007 (2007-12-01), pages 1067-1071, XP009141321, ISSN: 0253-9837
- WANG MIN ET AL: "Preparation and properties of low cerium content Ce-Zr-Y oxygen storage material with high thermal stability and high specific surface area", GAODENG XUEXIAO HUAXUE XUEBAO - CHEMICAL JOURNAL OF CHINESEUNIVERSITIES, JILIN DAXUE, BEIJING, CN, vol. 27, no. 5, 1 janvier 2006 (2006-01-01), pages 944-947, XP009141320, ISSN: 0251-0790
- ZHANG YU-JUAN ET AL: "Synthesis, characterization and catalytic properties of three-dimensional wormhole-like mesoporous Ag2O/Ce0.6Zr0.35Y0.05O2 nanoparticles in methane oxidation", GAODENG XUEXIAO HUAXUE XUEBAO - CHEMICAL JOURNAL OF CHINESEUNIVERSITIES, JILIN DAXUE, BEIJING, CN, vol. 28, no. 10, 1 janvier 2007 (2007-01-01), pages 1929-1934, XP009141319, ISSN: 0251-0790
- ZHANG CUIJUAN ET AL: "Preparation and characterization of BaCe0.5Zr0.4Y0.1O3-VFd via sol-gel method and solid state reaction", ZHONGGUO-XITU-XUEBAO: JIKAN = JOURNAL OF THE CHINESE RARE EARTH SOCIETY,, vol. 26, no. 4, 1 août 2008 (2008-08-01), pages 409-415, XP009141322, ISSN: 1000-4343
- RU-MING FENG, XIU-JUAN YANG, WEI-JIE JI, , AND CHAK-TONG AU: "hydrothermal synthesis of stable mesoporous ZrO2-Y2O3 and CeO2-ZrO2-Y2O3 from simple inorganic salts and CTAB template in aqueous medium.", MATERIALS CHEMISTRY AND PHYSICS, vol. 107, no. 1, 15 janvier 2008 (2008-01-15), pages 132-136, XP002610102, DOI: doi:10.1016/j.matchemphys.2007.06.055
- GUOZHI WANG, LEI ZHANG, JIGUANG DENG, HONGXING DAI, HONG HE AND XUEHONG ZI: "Synthesis and characterization of wormhole-like mesoporous Ce0.6Zr0.35Y0.05O2 solid solutions", CHINESE SCIENCE BULLETIN, vol. 52, no. 2, 1 janvier 2007 (2007-01-01), pages 175-180, XP002610103, DOI: 10.1007/s11434-007-0013-7

**Description**

La présente invention concerne une composition à base d'oxyde de zirconium, d'oxyde de cérium et d'au moins un oxyde d'une terre rare autre que le cérium, à porosité spécifique, son procédé de préparation et son utilisation en catalyse

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs.

Les produits de ce type doivent présenter une porosité adaptée à leur utilisation. Ainsi, ils doivent présenter un volume poreux suffisamment important et aussi comporter des pores de taille suffisamment grande pour permettre une bonne diffusion des gaz.

Toutefois, ces mêmes produits doivent aussi présenter des pores de petites tailles car ce sont ces pores qui contribuent à donner aux produits une surface spécifique suffisamment élevée pour que ceux-ci soient utilisables en catalyse.

Il est donc intéressant de trouver un bon compromis entre une surface importante, apportée par les pores de petites tailles et une meilleure diffusion des gaz apportée par les pores de grandes tailles.

L'invention a pour objet de proposer un produit qui possède un volume poreux important et à la fois des pores de grande et de petite taille.

Dans ce but, la composition de l'invention est à base d'oxyde de zirconium, d'oxyde de cérium et d'oxyde d'yttrium ou elle est à base d'oxyde de zirconium, d'oxyde de cérium et d'au moins deux oxydes de deux terres rares autres que le cérium, dans une proportion en masse en oxyde de zirconium d'au moins 20% et en oxyde de cérium d'au plus 70%, et elle est caractérisée en ce qu'elle présente après calcination à une température de 900°C pendant 4 heures, deux populations de pores dont les diamètres respectifs sont centrés, pour la première, autour d'une valeur comprise entre 20 et 40 nm et, pour la seconde, autour d'une valeur comprise entre 80 nm et 200 nm.

D'autres caractéristiques, détails et avantages de l'invention apparaîtront encore plus complètement à la lecture de la description et du dessin annexé dans lequel :

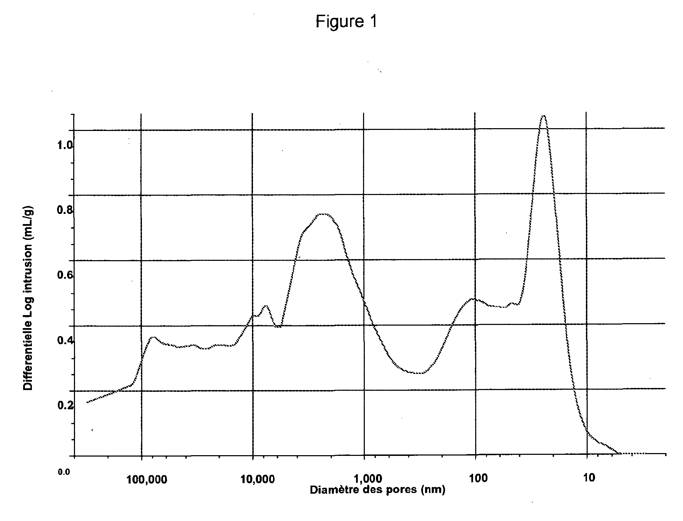

- la figure 1 est une courbe obtenue à partir d'un porogramme d'un produit selon l'invention.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Pour la présente description on entend par terre rare les éléments du groupe constitué par l'yttrium et les éléments de la classification périodique de numéro atomique compris inclusivement entre 57 et 71.

En outre, les calcinations pour une température et une durée données correspondent, sauf indication contraire, à des calcinations sous air à un palier de température sur la durée indiquée.

Les teneurs sont données en masse d'oxyde sauf indication contraire. L'oxyde de cérium est sous forme d'oxyde cérique, les oxydes des autres terres rares sous forme $Ln_2O_3$, Ln désignant la terre rare, à l'exception du praséodyme exprimé sous la forme $Pr_6O_{11}$.

On précise pour la suite de la description que, sauf indication contraire, dans les fourchettes de valeurs qui sont données, les valeurs aux bornes sont incluses.

Les compositions selon l'invention se caractérisent tout d'abord par la nature de leurs constituants.

Les compositions de l'invention sont à base d'oxyde de zirconium, d'oxyde de cérium et, selon un premier mode de réalisation, d'un oxyde d'yttrium. Selon un second mode de réalisation, les compositions de l'invention sont aussi à base d'oxyde de zirconium et d'oxyde de cérium et elles comprennent en outre des oxydes d'au moins deux autres terres rares qui sont différentes du cérium. Les compositions de l'invention peuvent être ainsi à base de trois, quatre ou, selon un autre mode de réalisation préféré, à base de cinq oxydes, c'est-à-dire dans ce cas que les compositions contiennent trois autres terres rares différentes du cérium.

Les terres rares autres que le cérium peuvent être plus particulièrement choisies parmi l'yttrium, le lanthane, le néodyme, le praséodyme ou le gadolinium. On peut citer plus particulièrement les compositions à base d'oxydes de zirconium, de cérium, d'yttrium, de néodyme et de lanthane ou bien à base d'oxydes de zirconium, de cérium, d'yttrium, de praséodyme et de lanthane.

La teneur en oxyde de zirconium est d'au moins 20%. Cette teneur peut être plus particulièrement d'au moins 25% ou encore plus particulièrement d'au moins 40%. Plus précisément cette teneur peut être d'au moins 45%, de préférence d'au moins 55%. On peut mentionner ainsi une teneur en zirconium qui sera comprise entre 40% et 80% et plus particulièrement entre 50% et 75%.

La teneur en oxyde de cérium est d'au plus 70% et plus particulièrement d'au plus 50% et encore plus particulièrement d'au plus 45% ou 40%. La quantité minimale de cérium n'est pas critique. De préférence toutefois elle est d'au moins 0,1% et plus particulièrement d'au moins 1% et encore plus particulièrement d'au moins 5%. Elle peut ainsi être comprise entre 5% et 45% et notamment entre 10% et 40%.

La teneur en oxyde d'ytrium ou plus généralement en oxydes de l'ensemble des terres rares autres que le cérium est généralement d'au plus 30%, plus particulièrement d'au plus 20% et d'au moins 4%, de préférence d'au moins 5% et notamment d'au moins 10%. Elle peut être en particulier comprise entre 10% et 30% et notamment entre 10% et 25%.

Dans le cas de compositions ne contenant que de l'oxyde d'yttrium les valeurs données ci-dessus s'appliquent de même cependant cette teneur en yttrium peut être plus particulièrement comprise entre 7% et 25%.

Comme on l'a vu plus haut, une des caractéristiques principales des compositions de l'invention est leur porosité.

Ainsi, les compositions de l'invention présentent deux populations de pores bien distinctes et qui sont centrées autour des valeurs données plus haut.

On indique ici et pour l'ensemble de la description que les porosités indiquées sont mesurées par porosimétrie par intrusion de mercure conformément à la norme ASTM D 4284-83 (Standard method for determining pore volume distribution of catalysts by mercury intrusion porosimetry).

La méthode de mesure de porosité donnée ci-dessus permet d'établir de manière connues des porogrammes donnant le volume poreux en fonction de la taille des pores (V = f(d), V désignant le volume poreux et d désignant le diamètre des pores). A partir de ce porogramme il est possible d'obtenir, toujours de manière connue, une courbe (C) donnant la dérivée de V en fonction de d. Cette courbe peut présenter des pics en fonction du diamètre des pores.

Au sens de l'invention on entend par « population de pores dont les diamètres sont centrés autour d'une valeur donnée », la présence dans la courbe (C) d'un pic dont le maximum est situé à cette valeur donnée. En outre, il doit être noté que lorsqu'il est indiqué que les compositions de l'invention présentent une ou deux populations de pores, après calcination à une température donnée, cela n'exclut pas qu'il puisse y avoir d'autres populations de pores. En fait les pores qui sont considérées comme caractéristiques de l'invention sont des mésopores voire des macropores c'est-à-dire des pores dont le diamètre est d'au plus 350 nm. En d'autres termes les compositions de l'invention présentent des pores dans un domaine allant d'environ 1 nm à environ 350 nm.

Ainsi, comme indiqué plus haut, après calcination à une température de 900°C pendant 4 heures ces compositions présentent, dans le domaine de pores donné ci-dessus d'environ 1 nm à environ 350 nm, deux populations de pores. La première population correspond à des pores dont les diamètres sont centrés sur une valeur comprise entre 20 nm et 40 nm, notamment entre 20 nm et 35 nm et plus particulièrement entre 20 et 30 nm et encore plus particulièrement autour de 25 nm. La seconde population correspond à des pores dont les diamètres sont centrés sur une valeur comprise entre 80 nm et 200 nm, notamment entre 80 nm et 150 nm et plus particulièrement entre 80 nm et 130 nm. Cette valeur peut être aussi comprise entre 90 nm et 150 nm et plus particulièrement entre 90 nm et 110 nm et encore plus particulièrement autour de 100 nm.

Après calcination à des températures plus élevées, la porosité des compositions de l'invention évolue. Ainsi, après calcination à 1000°C 4 heures elles présentent une population de pores dont le diamètre est centré sur une valeur comprise entre 30 nm et 40 nm et plus particulièrement autour de 35 nm. A cette température, les compositions de l'invention présentent cette population de pore précitée dans un domaine de pores allant d'environ 1 nm à environ 350 nm, plus particulièrement d'environ 1 nm à environ 300 nm.

Par ailleurs après calcination à 1100°C 4 heures, elles présentent une population de pores dont le diamètre est centré sur une valeur comprise entre 30 nm et 70 nm plus particulièrement autour de 50 nm. A cette température, les compositions de l'invention présentent cette population de pore précitée dans un domaine de pores allant d'environ 1 nm à environ 350 nm, plus particulièrement d'environ 1 nm à environ 300 nm.

La présence d'une population de pores centrée sur les valeurs décrites plus haut offre un bon compromis entre la stabilité thermique de la surface spécifique et la diffusion des gaz.

Les compositions de l'invention présentent par ailleurs un volume poreux total d'au moins 1,5 ml Hg/g, ce volume poreux étant mesuré sur des compositions ayant subi une calcination à une température de 900°C pendant 4 heures. Ce volume poreux total peut être notamment d'au moins 1,6 ml Hg/g, plus particulièrement d'au moins 1,7 ml et encore plus particulièrement d'au moins 1,8 ml Hg/g. Dans ces mêmes conditions de calcination des volumes poreux d'au moins environ 2,2 ml Hg/g peuvent être obtenus.

Le volume poreux total des compositions mesuré après calcination à 1000°C 4 heures est d'au moins 1,5 ml Hg/g et d'au moins 0,9 ml Hg/g à 1100°C 4 heures. A 1000°C des volumes poreux jusqu'à au moins environ 1,9 ml Hg/g peuvent être obtenus et à 1100°C jusqu'à au moins environ 1,3 ml Hg/g.

Selon un mode de réalisation particulier dans lequel les compositions contiennent au moins deux,oxydes de deux terres rares autres que le cérium, et dans lesquelles une de ces terres rares est le lanthane et pour une teneur en oxyde de zirconium qui est d'au moins 60% environ les compositions selon ce mode de réalisation peuvent se présenter après calcination à 1000°C 4 heures sous forme de deux phases cristallographiques différentes dont au moins une est de nature cubique.

Ces structures cristallographiques sont mises en évidence par les diagrammes en diffraction RX des compositions de l'invention. Ces mêmes diagrammes RX permettent de déterminer par la formule de Scherrer une taille de cristallite mesurée sur les pics les plus intenses d'au plus 8 nm.

Les compositions de l'invention présentent une surface spécifique élevée du fait notamment de leur porosité spécifique.

Ainsi, après calcination à 1100°C 4 heures, elles présentent pour les compositions ayant une teneur en oxyde de zirconium d'au moins 45% une surface spécifique d'au moins 25 $m^2$/g, plus particulièrement d'au moins 27 $m^2$/g, notamment dans le cas où la teneur en terre rare autre que le cérium est plus élevée. Des valeurs de surface d'au moins 33 $m^2$/g peuvent être obtenues.

Après calcination à 1150°C 10 heures elles peuvent présenter une surface spécifique d'au moins 7 $m^2$/g, de préférence d'au moins 10 $m^2$/g. Des valeurs de surface d'au moins 18 $m^2$/g peuvent être obtenues.

Après calcination à 1200°C 10 heures les compositions de l'invention peuvent présenter une surface spécifique d'au moins 2 $m^2$/g, de préférence d'au moins 4 $m^2$/g et encore plus particulièrement d'au moins 6 $m^2$/g. Des valeurs de surface jusqu'à environ 12 $m^2$/g peuvent être obtenues.

Probablement aussi du fait de leur porosité spécifique, les compositions de l'invention ont pour avantage de présenter une capacité de stockage et de relargage de l'oxygène (OSC) améliorée par rapport à des produits qui ne présentent pas deux populations de pores. Cette amélioration apparaîtra à la lecture des exemples donnés à la fin de la description.

Le procédé de préparation des compositions de l'invention va maintenant être décrit.

Ce procédé comprend les étapes suivantes :

- (a1) on forme un mélange comprenant soit des composés du zirconium et du cérium uniquement soit ces composés avec un ou des composés des terres rares autres que le cérium dans une quantité de ce ou ces derniers composés qui est inférieure à la quantité nécessaire pour obtenir la composition recherchée,
- (b1) on met en présence, sous agitation, ledit mélange avec un composé basique;
- (c1) on met en présence, sous agitation, le milieu obtenu à l'étape précédente avec soit le ou les composés des terres rares autres que le cérium si ce ou ces composés n'étaient pas présents à l'étape (a1) soit la quantité restante nécessaire dudit ou desdits composés, l'énergie d'agitation utilisée lors de l'étape (c1) étant inférieure à celle utilisée lors de l'étape (b1) ;
- (d1) on chauffe en milieu aqueux ledit précipité;
- (e1) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthytés ;
- (f1) on calcine le précipité ainsi obtenu.

La première étape (a1) du procédé consiste donc à préparer un mélange de certains des composés des éléments constitutifs de la composition que l'on cherche à préparer. Le mélange se fait généralement dans un milieu liquide qui est l'eau de préférence.

Cette étape (a1) peut être réalisée selon deux variantes.

Dans le cas de la première variante, qui est une variante préférée, le mélange formé à l'étape (a1) ne comprend, pour ce qui concerne les éléments constitutifs de la composition, c'est-à-dire zirconium, cérium et yttrium ou autres terres rares, que les composés du zirconium et du cérium.

Dans le cas de la seconde variante le mélange formé à l'étape (a1) comprend, outre les composés du zirconium et du cérium, le ou les composés des autres terres rares différentes du cérium mais dans une quantité qui est inférieure à la quantité totale stoechiométrique nécessaire de ce ou de ces composés d'autres terres rares pour l'obtention de la composition recherchée. Cette quantité peut être plus particulièrement au plus égale à la moitié de la quantité totale.

Ainsi, par exemple dans le cas des compositions à base d'oxydes de zirconium, de cérium et d'yttrium, selon cette seconde variante le composé d'yttrium sera présent à l'étape (a1) dans une quantité inférieure à la quantité totale stoechiométrique nécessaire pour la composition. Il en est de même pour les compositions à base d'oxydes de zirconium, de cérium et d'au moins deux autres terres rares, la quantité des composés de ces autres terres rares à l'étape (a1) étant inférieure à la quantité totale stoechiométrique nécessaire.

On notera que cette seconde variante doit s'entendre comme couvrant le cas, pour les compositions à base d'oxydes de zirconium, de cérium et d'au moins deux autres terres rares, où à l'étape (a1) la quantité nécessaire totale de composé d'au moins une des terres rares est présente dès cette étape et où c'est seulement pour au moins une des autres terres rares restantes que la quantité du composé de cette autre terre rare est inférieure à la quantité nécessaire. Il est aussi possible que le composé de cette autre terre rare soit absent à cette étape (a1).

Les composés sont de préférence des composés solubles. Ce peut être notamment des sels de zirconium, de cérium et de terre rare. Ces composés peuvent être choisis parmi les nitrates, les sulfates, les acétates, les chlorures, le nitrate céri-ammoniacal.

A titre d'exemples, on peut ainsi citer le sulfate de zirconium, le nitrate de zirconyle ou le chlorure de zirconyle.

Le sulfate de zirconyle peut provenir de la mise en solution de sulfate de zirconyle cristallisé. Il peut aussi avoir été obtenu par dissolution de sulfate basique de zirconium avec de l'acide sulfurique, ou bien encore par dissolution d'hydroxyde de zirconium par de l'acide sulfurique. De la même façon, le nitrate de zirconyle peut provenir de la mise en solution de nitrate de zirconyle cristallisé ou bien il peut avoir été obtenu par dissolution de carbonate basique de zirconium ou encore par dissolution d'hydroxyde de zirconium par de l'acide nitrique.

Il peut être avantageux d'utiliser un composé de zirconium sous la forme d'une combinaison ou d'un mélange des sels précités. On peut citer par exemple la combinaison de nitrate de zirconium avec du sulfate de zirconium, ou encore la combinaison de sulfate de zirconium avec le chlorure de zirconyle. Les proportions respectives des différents sels peuvent varier dans une large mesure, depuis 90/10 jusqu'à 10/90 par exemple, ces proportions désignant la contribution de chacun des sels en gramme d'oxyde de zirconium total.

Pour le cérium on peut citer aussi notamment les sels de cérium IV tels que le nitrate ou le nitrate céri-ammoniacal par exemple, qui conviennent ici particulièrement bien. De préférence, on utilise du nitrate cérique. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en oeuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera que lorsque le mélange de départ contient du cérium sous forme III, il est préférable de faire intervenir dans le cours du procédé un agent oxydant, par exemple de l'eau oxygénée. Cet agent oxydant peut être utilisé en étant ajouté au milieu réactionnel lors de l'étape (a1), lors de l'étape (b1) ou encore au début de l'étape (c1).

Il est avantageux d'utiliser des sels de pureté d'au moins 99,5% et plus particulièrement d'au moins 99,9%.

Il est enfin aussi possible d'utiliser un sol comme composé de départ du zirconium ou du cérium. Par sol on désigne tout système constitué de fines particules solides de dimensions colloïdales, c'est à dire des dimensions comprises entre environ 1 nm et environ 200 nm, à base d'un composé de zirconium ou de cérium ce composé étant généralement un oxyde et/ou un oxyde hydraté de zirconium ou de cérium, en suspension dans une phase liquide aqueuse.

Le mélange peut être indifféremment obtenu soit à partir de composés initialement à l'état solide que l'on introduira par la suite dans un pied de cuve d'eau par exemple, soit encore directement à partir de solutions ou suspensions de ces composés puis mélange, dans un ordre quelconque, desdites solutions ou suspensions.

Dans la deuxième étape (b1) du procédé, on met en présence ledit mélange avec un composé basique pour les faire réagir. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

Le composé basique peut être plus particulièrement utilisé sous forme d'une solution. Enfin, il peut être utilisé avec un excès stoechiométrique pour s'assurer d'une précipitation optimale.

Cette mise en présence se fait sous agitation. Elle peut être effectuée de manière quelconque, par exemple par l'addition d'un mélange préalablement formé des composés des éléments précités dans le composé basique sous forme d'une solution.

L'étape suivante (c1) du procédé consiste à mettre en présence le milieu issu de l'étape (b1) précédente avec les composés des terres rares autres que le cérium. Dans le cas de la première variante mentionnée plus haut dans laquelle le mélange de départ formé à l'étape (a1) ne comprend, en tant qu'éléments constitutifs de la composition, que les composés du zirconium et du cérium, ces composés sont donc introduits pour la première fois dans le procédé et dans la quantité totale stoechiométrique nécessaire de ces autres terres rares. Dans le cas de la seconde variante dans laquelle le mélange formé à l'étape (a1) comprend déjà des composés des autres terres rares différentes du cérium il s'agit donc de la quantité restante nécessaire de ces composés ou, éventuellement, de la quantité nécessaire du composé d'une terre rare si ce composé n'était pas présent à l'étape (a1).

Cette mise en présence peut être effectuée de manière quelconque, par exemple par l'addition d'un mélange préalablement formé des composés des terres rares autres que le cérium dans le mélange obtenu à l'issue de l'étape (b1). Elle se fait aussi sous agitation mais dans des conditions telles que l'énergie d'agitation utilisée lors de cette étape (c1) est inférieure à celle utilisée lors de l'étape (b1). Plus précisément l'énergie mise en oeuvre lors de l'étape (c1) est inférieure d'au moins 20% à celle de l'étape (b1) et elle peut être plus particulièrement inférieure à 40% et encore plus particulièrement à 50% de celle-ci.

On obtient à l'issue de l'étape (c1) un précipité en suspension dans le milieu réactionnel.

L'étape suivante (d1) du procédé est l'étape de chauffage de ce précipité dans ce milieu.

Ce chauffage peut être réalisé directement sur le milieu réactionnel obtenu à l'issue de l'étape (c1) ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C. Elle peut être comprise par exemple entre 100°C et 160°C. L'opération de chauffage peut être conduite en introduisant le milieu liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar ($10^5$ Pa) et 165 Bar ($1,65. 10^7$ Pa), de préférence entre 5 Bar ($5. 10^5$ Pa) et 165 Bar ($1,65. 10^7$ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante (e1) du procédé consiste à ajouter au précipité issu de l'étape précédente un additif qui est choisi parmi les tensioactifs anioniques, les tensioactifs non ioniques, les polyéthylène-glycols et les acides carboxyliques et leurs sels ainsi que les tensioactifs du type éthoxylats d'alcools gras carboxyméthylés.

En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés, les sarcosinates, les esters phosphates, les sulfates comme les sulfates d'alcool les sulfates d'éther alcool et les éthoxylates d'alcanolamide sulfatés, les sulfonates comme les sulfosuccinates, les alkyl benzène ou alkyl naphtalène sulfonates.

Comme tensioactifs non ioniques on peut mentionner les tensioactifs acétyléniques, les éthoxylates d'alcool, les alcanolamides, les oxydes d'amine, les alcanolamides éthoxylés, les amines éthoxylées à longues chaînes, les copolymères oxyde d'éthylène/oxyde de propylène, les dérivés du sorbiatan, l'éthylène glycol, le propylène glycol, le glycérol, les esters polyglyceryle et leurs dérivés éthoxylés, les alkylamines, les alkylimidazolines, les huiles éthoxylées et les éthoxylates d'alkylphénol. On peut citer notamment les produits vendus sous les marques IGEPAL®, DOWANOL®, RHODAMOX® et ALKAMIDE®.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement $CH_2$-COOH.

Ces produits peuvent répondre à la formule :

$$R_1\text{-O-}(CR_2R_3\text{-}CR_4R_5\text{-O})_n\text{-}CH_2\text{-COOH}$$

dans laquelle $R_1$ désigne une chaîne carbonée, saturée ou insaturée, dont la longueur est généralement d'au plus 22 atomes de carbone, de préférence d'au moins 12 atomes de carbone; $R_2$, $R_3$, $R_4$ et $R_5$ peuvent être identiques et représenter l'hydrogène ou encore $R_2$ peut représenter un groupe $CH_3$ et $R_3$, $R_4$ et $R_5$ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels $R_1$ peut être saturé et insaturé respectivement ou encore des produits comportant à la fois des groupements $-CH_2-CH_2-O-$ et $-C(CH_3)-CH_2-O-$.

L'addition du tensio-actif peut se faire de deux manières. Il peut être ajouté directement dans la suspension de précipité issue de l'étape précédente de chauffage (d1). Il peut aussi être ajouté au précipité solide après séparation de celui-ci par tout moyen connu du milieu dans lequel a eu lieu le chauffage.

La quantité de tensio-actif utilisée, exprimée en pourcentage en masse d'additif par rapport à la masse de la composition calculée en oxyde, est généralement comprise entre 5% et 100% plus particulièrement entre 15% et 60%.

Selon une autre variante avantageuse de l'invention, avant de mettre en oeuvre la dernière étape du procédé (étape de calcination), on procède à un lavage du précipité après l'avoir séparé du milieu dans lequel il se trouvait en suspension. Ce lavage peut se faire à l'eau, de préférence avec de l'eau à pH basique, par exemple de l'eau ammoniaquée.

Dans une dernière étape du procédé selon l'invention, le précipité récupéré est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500 et 900°C plus particulièrement entre 700°C et 800°C.

La durée de la calcination n'est pas critique et dépend de la température. A titre purement indicatif elle peut être d'au moins 2 heures plus particulièrement comprise entre 2 heures et 4 heures.

L'invention concerne aussi un autre mode de réalisation du procédé qui va être décrit ci-dessous.

Le procédé selon ce second mode comprend les étapes suivantes :

- (a2) on met en présence en phase liquide des composés du zirconium et du cérium avec un composé basique ce par quoi on forme un précipité;
- (b2) on chauffe en milieu aqueux ledit précipité;
- (c2) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (d2) on calcine le précipité issu de l'étape précédente à une température d'au plus 500°C ;
- (e2) on forme un mélange en phase liquide comprenant le produit issu de l'étape précédente et un ou des composés des terres rares autres que le cérium;
- (f2) on met en présence ce mélange avec un composé basique;
- (g2) on chauffe en milieu aqueux le produit solide issu de l'étape précédente;
- (h2) on calcine le produit obtenu à l'issue de l'étape précédente.

L'étape (a2) est semblable à l'étape (a1) du premier mode de réalisation décrit plus haut, de sorte que tout ce qui a été décrit pour l'étape (a1), notamment en ce qui concerne la nature des composés de zirconium et de cérium s'applique de même ici. De même qu'à l'issue de l'étape (a1) on obtient ici un précipité. L'étape (b2) est par ailleurs conduite dans les mêmes conditions que celle données pour l'étape (d1) du premier mode. Il en est de même aussi pour l'étape (c2), c'est-à-dire que l'on utilise les mêmes types d'additif que ceux décrits au sujet de l'étape (e1) et dans les mêmes conditions. A l'issue de l'addition de l'additif on peut, comme dans le mode de réalisation précédent, procéder à un lavage du précipité.

Enfin, après séparation du produit solide du milieu liquide obtenu à l'issue de l'étape (c2), on effectue une calcination de ce produit dans des conditions semblables à celles décrites pour l'étape (f1) mais dans une gamme de température généralement plus faible. Ainsi, la température de calcination à l'étape (d2) est d'au plus 500°C. Elle peut être par exemple comprise entre 150°C et 500°C, plus particulièrement entre 200°C et 300°C.

Le procédé du second mode comporte des étapes complémentaires dans lesquelles sont mis en oeuvre le ou les composés des terres rares autres que le cérium. Ce qui a été décrits au sujet de ces composés pour le premier mode s'applique de même ici.

Dans une étape (e2) on forme un mélange en phase liquide, généralement l'eau, comprenant le produit issu de l'étape précédente (d2) et un ou des composés des terres rares autres que le cérium. On met en présence ensuite (étape (f2)) ce mélange avec un composé basique du même type que celui décrit plus haut par exemple pour l'étape (b1) et il est possible d'utiliser le composé basique avec un excès stoechiométrique.

On obtient à l'issue de l'étape (f2) un milieu liquide contenant un solide ou précipité en suspension qui, dans l'étape suivante (g2), est chauffé dans les même conditions que celles préalablement décrites pour l'étape (d1).

Dans une dernière étape (h2), on récupère par tout moyen connu le solide ou précipité obtenu à l'issue de l'étape précédente et on lui fait subir une calcination. Les conditions de cette calcination peuvent être identiques à celles décrites pour l'étape (f1).

L'invention concerne aussi un troisième mode de réalisation du procédé qui comprend les étapes suivantes :

- (a3) on met en présence en phase liquide avec un composé basique soit des composés du zirconium et du cérium uniquement soit ces composés avec un ou des composés des terres rares autres que le cérium dans une quantité de ce ou ces derniers composés qui est inférieure à la quantité nécessaire pour obtenir la composition recherchée, ce par quoi on forme un précipité;
- (b3) on chauffe en milieu aqueux ledit précipité;
- (c3) on met en présence le milieu obtenu à l'étape précédente avec soit un ou des composés des terres rares autres que le cérium si ces composés n'étaient pas présents à l'étape (a3) soit la quantité restante nécessaire desdits composés;
- (d3) on met en présence le milieu obtenu à l'étape précédente avec un composé basique;
- (e3) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthytés ;
- (f3) on calcine le précipité ainsi obtenu.

Le procédé de ce troisième mode est proche de celui du premier mode mais il s'en distingue essentiellement par l'ordre des étapes. De ce fait, ce qui a été décrit plus haut pour les étapes (a1) combinée avec (b1), (d1) et (f1), s'applique aux étapes (a3), b(3) et (f3) respectivement. En outre la description précédente pour les composés de terres rares, l'additif du type tensioactif, le composé basique et plus généralement les conditions de mise en oeuvre des étapes (c1), (b1) et (e1) s'applique de même ici pour les étapes (c3), (d3) et (e3).

Des variantes sont envisageables pour chacun des trois modes de réalisation de procédé décrits plus haut, ces variantes pouvant permettre un contrôle de la distribution des pores.

Ainsi, il est possible d'ajuster la force ionique du mélange en phase liquide des étapes (a1) ou (a3) avant sa mise en présence avec le composé basique. Il est aussi possible de former une solution des composés de zirconium et de cérium préalablement à l'étape (a2) et d'ajuster la force ionique de cette solution avant de la mettre en présence du composé basique. Cet ajustement de la force ionique est réalisé par addition audit mélange ou à ladite solution d'ions supplémentaires choisis parmi les ions sulfates, chlorures et nitrates, par exemple par addition d'acide sulfurique ou de sulfate d'ammonium dans une solution de nitrate de zirconyle, de chlorure de zirconyle, ou d'un mélange des deux.

On peut encore utiliser le composé basique de l'une des étapes (b1), (a2) ou (a3) sous forme d'une solution dont on ajuste la force ionique avant la précipitation par addition à ladite solution d'un sel choisi parmi le nitrate d'ammonium, le sulfate d'ammonium ou le chlorure d'ammonium.

La quantité d'ions ajoutée lors de cet ajustement de la force ionique peut varier dans une large mesure. Exprimée en nombre de moles d'ions ajoutées par nombre de moles d'ions zirconium présentes, elle peut varier de 0,1 à 2.

Les compositions de l'invention telles que décrites plus haut ou telles qu'obtenues par le procédé de préparation décrit précédemment se présentent sous forme de poudres mais elles peuvent éventuellement être mises en forme pour se présenter sous forme de granulés, billes, cylindres ou nids d'abeille de dimensions variables.

Ces compositions peuvent être utilisées avec tout matériau employé habituellement dans le domaine de la formulation de catalyseur, c'est à dire notamment des matériaux inertes thermiquement. Ce matériau peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions avec un matériau du type de ceux mentionnés plus haut, le revêtement étant déposé sur un substrat du type par exemple monolithe métallique, par exemple FerCralloy, ou en céramique, par exemple en cordiérite, en carbure de silicium, en titanate d'alumine ou en mullite.

Ce revêtement est obtenu par mélange de la composition avec le matériau de manière à former une suspension qui peut être ensuite déposée sur le substrat.

Ces systèmes catalytiques et plus particulièrement les compositions de l'invention peuvent trouver de très nombreuses applications.

Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre.

Les systèmes catalytiques et les compositions de l'invention peuvent enfin être utilisés comme pièges à NOx ou pour favoriser la réduction des NOx même en milieu oxydant.

Dans le cas de ces utilisations en catalyse, les compositions de l'invention sont employées en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante.

De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

EXEMPLE 1

Cet exemple concerne la préparation selon la première variante de la première étape du procédé de l'invention d'une composition à base d'oxydes de zirconium, de cérium, de lanthane, d'yttrium et de néodyme dans les proportions respectives suivantes en pourcentage massique des oxydes : 75% -10%-2%-8%-5%.

On prépare au préalable deux solutions de nitrates l'une constituée de nitrates de cérium et de zirconium et l'autre de nitrates de lanthane, d'yttrium et de néodyme. Dans un premier bécher 0,39 l d'eau est introduit avec 0,25 l de nitrate de zirconium ($[ZrO_2]$ = 288 g/l et d = 1,433) ainsi que 0,04 l de nitrate de cérium ($[CeO_2]$ = 246g/l et d = 1,43).

Dans un second bécher sont introduits 76,6 ml d'eau, 4,1 ml de nitrate de lanthane ($[La_2O_3]$ = 471 g/l et d = 1,69), 29,4 ml de nitrate d'yttrium ($[Y_2O_3]$ = 261 g/l et d = 1,488) et 9,9 ml de nitrate de néodyme ($[Nd_2O_3]$ = 484 g/l et d = 1,743).

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment.

La première solution de nitrates est introduite en 45 minutes dans le réacteur agité à une vitesse de 500 tr/min, la seconde solution de nitrates est introduite en 15 minutes et l'agitation est fixée à 250 tr/min.

La suspension de précipité ainsi obtenue est placée dans un autoclave en acier inoxydable équipé d'un mobile d'agitation.

La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis lavée avec de l'eau ammoniaquée.

Le produit obtenu est ensuite calciné à 700°C pendant 4 heures de palier.

EXEMPLE 2

Cet exemple concerne la préparation selon la seconde variante de la première étape du procédé de l'invention d'une composition identique à celle de l'exemple 1.

Les solutions de nitrates de zirconium, de cérium, de lanthane, d'yttrium et de néodyme utilisées dans cet exemple ont les mêmes caractéristiques que celles utilisées dans l'exemple 1.

On prépare au préalable deux solutions de nitrates l'une constituée de nitrates de cérium et de zirconium avec 50% des autres éléments terres rares de la composition et l'autre constituée de nitrates de la quantité restante (50%) de ces mêmes autres éléments.

Dans un premier bécher 0,41 l d'eau est introduit avec 0,275 l de nitrate de zirconium ainsi que 0,038 l de nitrate de cérium, 2,1 ml de nitrate de lanthane, 15,2 ml de nitrate d'yttrium et enfin 5 ml de nitrate de néodyme. Dans un second bécher sont introduit 37,7 ml d'eau, 2,1 ml nitrate de lanthane, 15,2 ml de nitrate d'yttrium et 5 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment.

La première solution de nitrates est introduite en 45 minutes dans le réacteur agité à une vitesse de 500 tr/min, la seconde solution de nitrates est introduite en 15 minutes et l'agitation est fixée à 200 tr/min.

La suspension de précipité ainsi obtenue est placée dans un autoclave et on procède ensuite (autoclavage, addition et quantité d'acide laurique, lavage et calcination) comme dans l'exemple 1.

EXEMPLE 3

Cet exemple concerne la préparation selon la première variante de la première étape du procédé de l'invention d'une composition à base d'oxydes de zirconium, de cérium, de lanthane, d'yttrium et de néodyme dans les proportions respectives suivantes en pourcentage massique des oxydes : 60% - 25% - 2% - 8% - 5%.

Les solutions de nitrates de zirconium, de cérium, de lanthane, d'yttrium et de néodyme utilisées dans cet exemple ont les mêmes caractéristiques que celles utilisées dans l'exemple 1.

On prépare au préalable deux solutions de nitrates l'une constituée de nitrates de cérium et de zirconium et l'autre de nitrates de lanthane, d'yttrium et de néodyme. Dans un premier bécher 0,382 l d'eau est introduit avec 0,2 l de nitrate de zirconium ainsi que 97,6 ml de nitrate de cérium. Dans un second bécher sont introduit 76,6 ml d'eau, 4,1 ml de nitrate de lanthane, 29,4 ml de nitrate d'yttrium et 9,9 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stœchiométrique en ammoniaque de 40% par rapport aux cations à précipiter.

On maintient sous agitation constante les deux solutions préparées précédemment. La première solution de nitrates est introduite en 45 minutes dans le réacteur agité à une vitesse de 500 tr/min, la seconde solution de nitrates est introduite en 15 minutes et l'agitation est fixée à 250 tr/min.

La suspension de précipité ainsi obtenue est placée dans un autoclave en acier inoxydable équipé d'un mobile d'agitation. La température du milieu est portée à 150°C pendant 1 heure sous agitation.

On procède ensuite (addition et quantité d'acide laurique, lavage et calcination) comme dans l'exemple 1.

EXEMPLE 4

Cet exemple concerne la préparation selon la première variante de la première étape du procédé de l'invention d'une composition à base d'oxydes de zirconium, de cérium, de lanthane, d'yttrium et de néodyme dans les proportions respectives suivantes en pourcentage massique des oxydes : 45% - 40% - 2% - 8% - 5%.

Les solutions de nitrates de zirconium, de cérium, de lanthane, d'yttrium et de néodyme utilisées dans cet exemple ont les mêmes caractéristiques que celles utilisées dans l'exemple 1.

On prépare au préalable deux solutions de nitrates l'une constituée de nitrates de cérium et de zirconium et l'autre de nitrates de lanthane, d'yttrium et de néodyme. Dans un premier bécher 0,37 l d'eau est introduit avec 0,15 l de nitrate de zirconium ainsi que 0,156 l de nitrate de cérium. Dans un second bécher sont introduits 76,6 ml d'eau, 4,1 ml de nitrate de lanthane, 29,4 ml de nitrate d'yttrium et 9,9 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrates est introduite en 45 minutes dans le réacteur agité à une vitesse de 450 tr/min, la seconde solution de nitrates est introduite en 15 minutes et l'agitation est fixée à 200 tr/min.

La suspension de précipité ainsi obtenue est placée dans un autoclave en acier inoxydable équipé d'un mobile d'agitation. La température du milieu est portée à 125°C pendant 1 heure sous agitation.

On procède ensuite (addition et quantité d'acide laurique, lavage et calcination) comme dans l'exemple 1.

EXEMPLE 5

Cet exemple concerne la préparation selon la première variante de la première étape du procédé de l'invention d'une composition à base d'oxydes de zirconium, de cérium, de lanthane, d'yttrium et de néodyme dans les proportions respectives suivantes en pourcentage massique des oxydes : 25% - 60% - 2% - 8% - 5%.

Les solutions de nitrates de zirconium, de cérium, de lanthane, d'yttrium et de néodyme utilisées dans cet exemple ont les mêmes caractéristiques que celles utilisées dans l'exemple 1.

On prépare au préalable deux solutions de nitrates l'une constituée de nitrates de cérium et de zirconium et l'autre de nitrates de lanthane, d'yttrium et de néodyme.

Dans un premier bécher 0,362 l d'eau est introduit avec 83 ml de nitrate de zirconium ainsi que 0,234 l de nitrate de cérium. Dans un second bécher sont introduit 76,6 ml d'eau, 4,1 ml de nitrate de lanthane, 29,4 ml de nitrate d'yttrium et 9,9 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrates est introduite en 45 minutes dans le réacteur agité à une vitesse de 350 tr/min, la seconde solution de nitrates est introduite en 15 minutes et l'agitation est fixée à 190 tr/min.

La suspension de précipité ainsi obtenue est placée dans un autoclave en acier inoxydable équipé d'un mobile d'agitation. La température du milieu est portée à 150°C pendant 30 minutes sous agitation.

On procède ensuite (addition et quantité d'acide laurique, lavage et calcination) comme dans l'exemple 1.

EXEMPLE 6

Cet exemple concerne la préparation selon la première variante de la première étape du procédé de l'invention d'une composition à base d'oxydes de zirconium, de cérium, d'yttrium et de néodyme dans les proportions respectives suivantes en pourcentage massique des oxydes : 75% - 10%-12% - 3%.

Les solutions de nitrates de zirconium, de cérium, d'yttrium et de néodyme utilisées dans cet exemple ont les mêmes caractéristiques que celles utilisées dans l'exemple 1.

On prépare au préalable deux solutions de nitrates l'une constituée de nitrates de cérium et de zirconium et l'autre de nitrates d'yttrium et de néodyme. Dans un premier bécher 0,39 l d'eau est introduit avec 0,25 l de nitrate de zirconium ainsi que 0,039 l de nitrate de cérium. Dans un second bécher sont introduits 69,9 ml d'eau, 44,1 ml de nitrate d'yttrium et 6 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrates est introduite en 45 minutes dans le réacteur agité à une vitesse de 500 tr/min, la seconde solution de nitrates est introduite en 15 minutes et l'agitation est fixée à 250 tr/min.

La suspension de précipité ainsi obtenue est placée dans un autoclave et on procède ensuite (autoclavage, addition et quantité d'acide laurique, lavage et calcination) comme dans l'exemple 1.

EXEMPLE 7

Cet exemple concerne la préparation selon la première variante de la première étape du procédé de l'invention d'une composition à base d'oxydes de zirconium, de cérium, de lanthane, d'yttrium et de praséodyme dans les proportions respectives suivantes en pourcentage massique des oxydes : 75% - 10% - 3% - 7% - 5%.

Les solutions de nitrates de zirconium, de cérium, de lanthane et d'yttrium utilisées dans cet exemple ont les mêmes caractéristiques que celles utilisées dans l'exemple 1.

On prépare au préalable deux solutions de nitrates l'une constituée de nitrates de cérium et de zirconium et l'autre constituée de nitrates de lanthane, d'yttrium et de praséodyme.

Dans un premier bécher 0,39 l d'eau est introduit avec 0,251 de nitrate de zirconium ainsi que 0,039 l de nitrate de cérium. Dans un second bécher sont introduit 6,1 ml de nitrate de lanthane, 25,7 ml de nitrate d'yttrium, 9,6 ml de nitrate de praséodyme ($[Pr_2O_5]$=500g/l et d=1,74) et de l'eau afin d'obtenir une solution à 120 g/l.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrates est introduite en 45 minutes dans le réacteur agité à une vitesse de 400 tr/min, la seconde solution de nitrates est introduite en 15 minutes et l'agitation est fixée à 250 tr/min.

La suspension de précipité ainsi obtenue est placée dans un autoclave et on procède ensuite (autoclavage, addition et quantité d'acide laurique, lavage et calcination) comme dans l'exemple 1.

EXEMPLE 8

Cet exemple concerne la préparation selon la première variante de la première étape du procédé de l'invention d'une composition à base d'oxydes de zirconium, de cérium, de lanthane, d'yttrium et de néodyme dans les proportions respectives suivantes en pourcentage massique des oxydes : 65% - 10% - 3,4% - 13,3% - 8,3%.

Les solutions de nitrates de zirconium, de cérium, de lanthane, d'yttrium et de néodyme utilisées dans cet exemple ont les mêmes caractéristiques que celles utilisées dans l'exemple 1.

On prépare au préalable deux solutions de nitrates l'une constituée de nitrates de cérium et de zirconium et l'autre de nitrates de lanthane, d'yttrium et de néodyme. Dans un premier bécher 0,34 l d'eau est introduit avec 0,22 l de nitrate de zirconium ainsi que 0,039 l de nitrate de cérium. Dans un second bécher sont introduit 0,127 l d'eau, 6,9 ml de nitrate de lanthane, 0,049 l de nitrate d'yttrium et 16,5 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrates est introduite en 45 minutes dans le réacteur agité à une vitesse de 500 tr/min, la seconde solution de nitrates est introduite en 15 minutes et l'agitation est fixée à 250 tr/min.

La suspension de précipité ainsi obtenue est placée dans un autoclave et on procède ensuite (autoclavage, addition et quantité d'acide laurique, lavage et calcination) comme dans l'exemple 1.

EXEMPLE 9

Cet exemple concerne la préparation d'une composition à base d'oxydes de zirconium, de cérium, de lanthane et d'yttrium dans les proportions respectives suivantes en pourcentage massique des oxydes : 55% - 30%-7,5% - 7,5%.

On prépare au préalable deux solutions de nitrates l'une constituée de nitrates de cérium et de zirconium et l'autre de nitrates de lanthane et d'yttrium.

Dans un premier bécher 305 ml d'eau sont introduits avec 0,2 l de nitrate de zirconium ($[ZrO_2]$ = 265 g/l et d = 1,408) ainsi que 106 ml de nitrate de cérium ($[CeO_2]$ = 270 g/l et d = 1,43). Dans un second bécher sont introduits 70 ml d'eau, 15,8 ml de nitrate de lanthane ($[La_2O_3]$ = 454 g/l et d = 1,687), 19,9 ml de nitrate d'yttrium ($[Y_2O_3]$ = 361 g/l et d = 1,65).

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrates est introduite en 45 minutes dans le réacteur agité à une vitesse de 500 tr/min, la seconde solution de nitrates est introduite en 15 minutes et l'agitation est fixée à 250 tr/min.

La suspension de précipité ainsi obtenue est placée dans un autoclave et on procède ensuite (autoclavage, addition et quantité d'acide laurique, lavage et calcination) comme dans l'exemple 1.

EXEMPLE 10

Cet exemple concerne la préparation d'une composition à base d'oxydes de zirconium, de cérium, de gadolinium et d'yttrium dans les proportions respectives suivantes en pourcentage massique des oxydes : 55% - 30%-7,5% - 7,5%.

On prépare au préalable deux solutions de nitrates l'une constituée de nitrates de cérium et de zirconium et l'autre de nitrates de lanthane et d'yttrium.

Dans un premier bécher 0,39 l d'eau sont introduits avec 0,25 l de nitrate de zirconium ($[ZrO_2]$ = 288 g/l et d = 1,433) ainsi que 0,04 l de nitrate de cérium ($[CeO_2]$ = 246 g/l et d = 1,43). Dans un second bécher sont introduits 76,6 ml d'eau, 18,8 ml de nitrate de gadolinium ($[Gd_2O_3]$ = 383 g/l et d = 1,59), 29,4 ml de nitrate d'yttrium ($[Y_2O_3]$ = 261 g/l et d = 1,488).

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrates est introduite en 45 minutes dans le réacteur agité à une vitesse de 500 tr/min, la seconde solution de nitrates est introduite en 15 minutes et l'agitation est fixée à 250 tr/min.

La suspension de précipité ainsi obtenue est placée dans un autoclave et on procède ensuite (autoclavage, addition et quantité d'acide laurique, lavage et calcination) comme dans l'exemple 1.

EXEMPLE 11 COMPARATIF

Cet exemple concerne la préparation d'une composition identique à celle de l'exemple 1 par un procédé dans lequel les composés des terres rares autres que le cérium sont apportés à des étapes différentes du procédé, comme dans les exemples précédents, mais avec la même énergie d'agitation dans chacune de ces étapes, contrairement à ces exemples.

Les solutions de nitrates de zirconium, de cérium, de lanthane, d'yttrium et de néodyme utilisées dans cet exemple ont les mêmes caractéristiques que celles utilisées dans l'exemple 1.

On prépare au préalable deux solutions de nitrates l'une constituée de nitrates de cérium, de zirconium, de lanthane et d'yttrium et l'autre de nitrate de néodyme. Dans un premier bécher 0,41 l d'eau est introduit avec 0,25 l de nitrate de zirconium ainsi que 0,04 l de nitrate de cérium, 4,1 ml de nitrate de lanthane, 29,4 ml de nitrate d'yttrium. Dans un second bécher est introduit 50,6 ml d'eau et 9,9 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrates est introduite en 50 minutes dans le réacteur agité à une vitesse de 400 tr/min, la seconde solution de nitrate est introduite en 10 minutes et l'agitation est fixée à 400 tr/min.

La suspension de précipité ainsi obtenue est placée dans un autoclave et on procède ensuite (autoclavage, addition et quantité d'acide laurique, lavage et calcination) comme dans l'exemple 1.

EXEMPLE 12 COMPARATIF

Cet exemple concerne la préparation d'une composition à base d'oxydes de zirconium, de cérium, d'yttrium et de néodyme dans les proportions respectives suivantes en pourcentage massique des oxydes : 72% - 10% - 8% - 10%, selon un procédé dans lequel les composés des terres rares autres que le cérium sont apportés à des étapes différentes du procédé, comme dans les exemples 1 à 8, mais avec la même énergie d'agitation dans chacune'de ces étapes, contrairement à ces exemples.

Les solutions de nitrates de zirconium, de cérium, d'yttrium et de néodyme utilisées dans cet exemple ont les mêmes caractéristiques que celles utilisées dans l'exemple 1.

On prépare au préalable deux solutions de nitrates l'une constituée de nitrates de cérium et de zirconium et l'autre constituée de nitrates d'yttrium et de néodyme. Dans un premier bécher 0,377 l d'eau est introduit avec 0,24 l de nitrate de zirconium ainsi que 0,039 l de nitrate de cérium. Dans un second bécher sont introduits 94,7 ml d'eau, 29,4 ml de nitrate d'yttrium et 19,8 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment.

La première solution de nitrates est introduite en 40 minutes dans le réacteur agité à une vitesse de 500 tr/min, la seconde solution de nitrate est introduite en 20 minutes et l'agitation est fixée à 500 tr/min.

La suspension de précipité ainsi obtenue est placée dans un autoclave et on procède ensuite (autoclavage, addition et quantité d'acide laurique, lavage et calcination) comme dans l'exemple 1.

EXEMPLE 13 COMPARATIF

Cet exemple concerne la préparation d'une composition identique à celle de l'exemple 2 mais selon un procédé dans lequel les composés de zirconium, de cérium et des autres terres rares sont apportés dans la même étape.

Les solutions de nitrates de zirconium, de cérium, de lanthane, d'yttrium et de néodyme utilisées dans cet exemple ont les mêmes caractéristiques que celles utilisées dans l'exemple 1.

On prépare au préalable un solution de nitrates à partir de 0,44 l d'eau, 0,27 l de nitrate de zirconium, 0,039 l de nitrate de cérium, 4,1 ml de nitrate de lanthane, 29,4 ml de nitrate d'yttrium et 9,9 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante la solution de nitrates préparée précédemment.

Cette solution est introduite en 60 minutes dans un réacteur agité à une vitesse de 450 tr/min.

La suspension de précipité ainsi obtenue est placée dans un autoclave et on procède ensuite (autoclavage, addition et quantité d'acide laurique, lavage et calcination) comme dans l'exemple 1.

EXEMPLE 14 COMPARATIF

Cet exemple concerne la préparation d'une composition identique à celle de l'exemple 3 mais selon un procédé dans lequel les composés de zirconium, de cérium et des autres terres rares sont apportés dans la même étape.

Les solutions de nitrates de zirconium, de cérium, de lanthane, d'yttrium et de néodyme utilisés dans cet

exemple ont les mêmes caractéristiques que celles utilisées dans l'exemple 1.

On prépare une solution de nitrates à partir de 0,458 l d'eau, 0,2 l de nitrate de zirconium, 97,6 ml de nitrate de cérium, 4,1 ml de nitrate de lanthane, 29,4 ml de nitrate d'yttrium et 9,9 ml de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante la solution préparée précédemment.

La solution de nitrates est introduite en 60minutes dans le réacteur agité à une vitesse de 400 tr/min.

La suspension de précipité ainsi obtenue est placée dans un autoclave en acier inoxydable équipé d'un mobile d'agitation.

La température du milieu est portée à 150°C pendant 1 heure sous agitation.

On procède ensuite (addition et quantité d'acide laurique, lavage et calcination) comme dans l'exemple 1.

On donne dans le tableau 1 ci-dessous pour les compositions de chacun des exemples précédents les surfaces spécifiques après calcination aux durées et températures indiquées.

Les calcinations à 900°C et aux autres températures jusqu'à 1200°C ont été faites sur les produits obtenus à l'issue du procédé décrit dans les exemples, c'est-à-dire des produits qui ont déjà subi une première calcination à 700°C.

Tableau 1

| Surface spécifique (m²/g) Exemple | 4 h 700°C | 4h 900°C | 4h 1000°C | 4h 1100°C | 10h 1150°C | 10H 1200°C |
|---|---|---|---|---|---|---|
| 1 | 75 | 64,6 | 48,3 | 27 | 11,8 | 2,6 |
| 2 | 77 | 69,3 | 49,2 | 26 | 7,1 | 2,1 |
| 3 | 71 | 68 | 52 | 27,4 | 13 | 4 |
| 4 | | 66 | 47,6 | 28,8 | 15,8 | 6,4 |
| 5 | | 56,7 | 37,5 | 24 | 15,5 | 9,7 |
| 6 | | | | 27 | 17 | |
| 7 | | | | 26 | 17,5 | |
| 8 | | 66,4 | 47,6 | 28,8 | 15,8 | 8,5 |
| 9 | 80 | 65 | 50 | 33 | 14 | 4 |
| 10 | 75 | 63 | 49 | 29 | 11 | 4 |
| Comparatif 11 | 79 | 64 | 47 | 27 | 7,4 | |
| Comparatif 12 | 70 | 64 | 49 | 27 | 7,2 | |
| Comparatif 13 | 69 | 65 | 50 | 20,8 | 6,7 | 2,1 |
| Comparatif 14 | 61 | 59 | 50 | 23,6 | 6,5 | 1,7 |

On donne dans le tableau 2 ci-dessous pour les compositions de chacun des exemples précédents le volume poreux total et la taille des pores.

Ces caractéristiques de porosités sont celles mesurées sur des compositions qui ont été calcinées à 900°C 4 heures.

Les valeurs qui figurent dans la colonne « taille des pores » correspondent aux diamètres autour desquels sont centrées les populations de pores, l'indication d'une seule valeur indiquant la présence d'une seule population et l'indication de deux valeurs indiquant la présence de deux populations.

Tableau 2

| Exemple | Volume poreux total (ml Hg/g) | Taille des pores (nm) |
|---|---|---|
| 1 | 1,8 | 25-100 |
| 2 | 1,6 | 25-100 |
| 3 | 1,74 | 25-100 |

(suite)

| Exemple | Volume poreux total (ml Hg/g) | Taille des pores (nm) |
|---|---|---|
| 4 | 1,8 | 30-100 |
| 5 | 1,5 | 35-100 |
| 6 | 1,7 | 30-100 |
| 7 | 1,8 | 32-100 |
| 8 | 1,8 | 30-150 |
| 9 | 1,6 | 25-100 |
| 10 | 1,7 | 30-90 |
| Comparatif 11 | 1,4 | 30 |
| Comparatif 12 | 1,42 | 32 |
| Comparatif 13 | 1,3 | 30 |
| Comparatif 14 | 1,3 | 30 |

La figure 1 annexée est une courbe obtenue à partir d'un porogramme du produit de l'exemple 1 après calcination à 900°C.

Cette courbe donne la dérivée du volume poreux en fonction du diamètre des pores. On voit bien sur cette courbe la présence d'un premier pic centré sur une valeur du diamètre de pore de 25 nm et d'un second pic centré sur une valeur du diamètre de pore de 100 nm.

Structure cristallographique

Après calcination à 1000°C 4 heures, les compositions des exemples 1, 2, 7 et 8 présentent deux phases cristallographiques distinctes de nature cubique et celles des exemples 3 à 6 et 9 à 14 une phase unique.

EXEMPLE 15

Cet exemple illustre les propriétés d'OSC de compositions selon l'invention (compositions selon les exemples 1 et 3) et de compositions comparatives (compositions selon l'exemple 9 comparatif et selon l'exemple 12 comparatif).

Préparation des échantillons

On effectue tout d'abord une imprégnation à sec d'échantillons de compositions telles qu'obtenues à l'issue du procédé décrit dans les exemples mentionnés dans le paragraphe précédent à partir d'une solution de nitrate de rhodium dans des conditions telles que les compositions présentent après imprégnation une teneur en rhodium de 0,1% (teneur massique en Rh métal).

Les compositions imprégnées sont ensuite calcinées à 500°C 4 heures sous air. Elles subissent ensuite un traitement de vieillissement à 1100°C 6 heures dans une atmosphère de composition 2% en CO, 10% en $H_2O$ et le reste en azote puis de composition 2% en $O_2$, 10% en $H_2O$ et le reste en azote, le changement d'atmosphère se faisant toutes les 5 minutes.

Mesure de l'OSC

30 mg de produit sont placés dans un réacteur dont la température est régulée à 350°C. On injecte dans ce réacteur des quantités déterminées de CO (5% dans l'hélium) et de $O_2$ (2,5% dans l'hélium) en alternance, sous une fréquence de 1 Hz (une injection pendant 1 seconde) et à un débit de 200 $cm^3$/minute. On analyse à la sortie du réacteur les teneurs en CO et $O_2$ à l'aide d'un spectromètre de masse.

On exprime l'OSC en ml d'$O_2$ par gramme et par seconde à partir de la formule :

$$\text{OSC (ml.g}^{-1}\text{.s}^{-1}\text{)} = [\Delta(CO) \times dCO] / (2 \times P)$$

dans laquelle Δ(CO) représente la quantité de CO convertie à chaque seconde, dCO le débit de CO et P la masse de l'échantillon.

On donne dans le tableau 3 ci-dessous, les résultats obtenus.

Tableau 3

| Composition | OSC (ml $O_2$/g) |
|---|---|
| Exemple 1 | 1,2 |
| Exemple 9 comparatif | 1 |
| Exemple 3 | 1,75 |
| Exemple 12 comparatif | 1,5 |

On voit clairement que pour des produits de compositions identiques (exemples 1 et 9 et exemples 3 et 12 respectivement) les produits selon l'invention présentent une OSC améliorée.

**Revendications**

1. Composition à base d'oxyde de zirconium, d'oxyde de cérium et d'oxyde d'yttrium ou à base d'oxyde de zirconium, d'oxyde de cérium et d'au moins deux oxydes de deux terres rares autres que le cérium, dans une proportion en masse en oxyde de zirconium d'au moins 20% et en oxyde de cérium d'au plus 70%; **caractérisée en ce qu'**elle présente après calcination à une température de 900°C pendant 4 heures, deux populations de pores dont les diamètres respectifs sont centrés, pour la première, autour d'une valeur comprise entre 20 et 40 nm et, pour la seconde, autour d'une valeur comprise entre 80 nm et 200 nm.

2. Composition selon la revendication 1, **caractérisée en ce que** le diamètre de la première population de pores est centré autour d'une valeur comprise entre 20 nm et 35 nm et plus particulièrement entre 20 nm et 30 nm et le diamètre de la seconde population de pores est centré autour d'une valeur comprise entre 80 nm et 150 nm et plus particulièrement entre 90 nm et 110 nm.

3. Composition selon la revendication 1 ou 2, **caractérisée en ce qu'**après calcination à une température de 900°C pendant 4 heures, elle présente un volume poreux total d'au moins 1,5 mlHg/g, plus particulièrement d'au moins 1,7 mlHg/g.

4. Composition selon l'une des revendications précédentes, **caractérisée en ce qu'**elle contient au moins deux oxydes de deux terres rares autres que le cérium et dans laquelle une de ces terres rares est le lanthane; **en ce qu'**elle présente une teneur en oxyde de zirconium d'au moins 60% et **en ce qu'**après calcination à 1000°C 4 heures, elle se présente sous forme de deux phases cristallographiques différentes dont au moins une est de nature cubique.

5. Composition selon l'une des revendications précédentes, **caractérisée en ce qu'**après calcination à 1100°C 4 heures, elle présente une population de pores dont le diamètre est centré autour d'une valeur comprise entre 30 nm et 70 nm.

6. Composition selon la revendication 4 ou 5, **caractérisée en ce qu'**après calcination à 1100°C 4 heures, elle présente un volume poreux total d'au moins 0,9 mlHg/g.

7. Composition selon l'une des revendications précédentes, **caractérisée en ce qu'**elle présente une teneur en oxyde de cérium comprise entre 5% et 45%.

8. Composition selon l'une des revendications précédentes, **caractérisée en ce qu'**elle présente une teneur en oxydes des terres rares autres que le cérium comprise entre 10% et 30%.

9. Composition selon l'une des revendications précédentes **caractérisée en ce qu'**elle présente une teneur en oxyde de zirconium d'au moins 45% et après calcination à 1100°C 4 heures une surface spécifique d'au moins 25 $m^2$/g.

10. Composition selon l'une des revendications précédentes **caractérisée en ce qu'**après calcination à 1150°C 10 heures, elle présente une surface spécifique d'au moins 7 m$^2$/g, plus particulièrement d'au moins 10 m$^2$/g.

11. Procédé de préparation d'une composition selon l'une des revendications 1 à 10, **caractérisé en ce qu'**il comprend les étapes suivantes :

- (a1) on forme un mélange comprenant soit des composés du zirconium et du cérium uniquement soit ces composés avec un ou des composés des terres rares autres que le cérium dans une quantité de ces derniers composés qui est inférieure à la quantité nécessaire pour obtenir la composition recherchée,
- (b1) on met en présence, sous agitation, ledit mélange avec un composé basique;
- (c1) on met en présence, sous agitation, le milieu obtenu à l'étape précédente avec soit le ou les composés des terres rares autres que le cérium si ce ou ces composés n'étaient pas présents à l'étape (a1) soit la quantité restante nécessaire dudit ou desdits composés, l'énergie d'agitation utilisée lors de l'étape (c1) étant inférieure à celle utilisée lors de l'étape (b1), ce par quoi on obtient un précipité;
- (d1) on chauffe en milieu aqueux ledit précipité;
- (e1) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (f1) on calcine le précipité ainsi obtenu.

12. Procédé de préparation d'une composition selon l'une des revendications 1 à 10, **caractérisé en ce qu'**il comprend les étapes suivantes :

- (a2) on met en présence en phase liquide des composés du zirconium et du cérium avec un composé basique ce par quoi on forme un précipité;
- (b2) on chauffe en milieu aqueux ledit précipité;
- (c2) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (d2) on calcine le précipité issu de l'étape précédente à une température d'au plus 500°C;
- (e2) on forme un mélange en phase liquide comprenant le produit issu de l'étape précédente et un ou des composés des terres rares autres que le cérium;
- (f2) on met en présence ce mélange avec un composé basique;
- (g2) on chauffe en milieu aqueux le produit solide issu de l'étape précédente;
- (h2) on calcine le produit obtenu à l'issue de l'étape précédente.

13. Procédé de préparation d'une composition selon l'une des revendications 1 à 10, **caractérisé en ce qu'**il comprend les étapes suivantes

- (a3) on met en présence en phase liquide avec un composé basique soit des composés du zirconium et du cérium uniquement soit ces composés avec un ou des composés des terres rares autres que le cérium dans une quantité de ce ou ces derniers composés qui est inférieure à la quantité nécessaire pour obtenir la composition recherchée, ce par quoi on forme un précipité;
- (b3) on chauffe en milieu aqueux ledit précipité;
- (c3) on met en présence le milieu obtenu à l'étape précédente avec soit un ou des composés des terres rares autres que le cérium si ces composés n'étaient pas présents à l'étape (a3) soit la quantité restante nécessaire desdits composés;
- (d3) on met en présence le milieu obtenu à l'étape précédente avec un composé basique;
- (e3) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthytés ;
- (f3) on calcine le précipité ainsi obtenu.

14. Procédé selon l'une des revendications 11 à 13, **caractérisé en ce qu'**on utilise comme composés du zirconium, du cérium et des autres terres rares un composé choisi parmi les nitrates, les sulfates, les acétates, les chlorures, le nitrate céri-ammoniacal.

15. Procédé selon l'une des revendications 11 à 13, **caractérisé en ce que** le chauffage du précipité des étapes (d1), (b2), (g2) et (b3) est réalisé à une température d'au moins 100°C.

**16.** Système catalytique, **caractérisé en ce qu'**il comprend une composition selon l'une des revendications 1 à 10.

**17.** Procédé de traitement des gaz d'échappement des moteurs à combustion interne, **caractérisé en ce qu'**on utilise à titre de catalyseur un système catalytique selon la revendication 16 ou une composition selon l'une des revendications 1 à 10.

**Patentansprüche**

**1.** Zusammensetzung auf Basis von Zirconiumoxid, Ceroxid und Yttriumoxid oder auf Basis von Zirconiumoxid, Ceroxid und mindestens zwei Oxiden von zwei Seltenerdmetallen, die von Cer verschieden sind, in einem Massenanteil an Zirconiumoxid von mindestens 20% und an Ceroxid von mindestens 70%; **dadurch gekennzeichnet, dass** sie nach 4 Stunden Calcinierung bei 900°C zwei Populationen von Poren, deren jeweilige Durchmesser für die erste Population um einen Wert zwischen 20 und 40 nm und für die zweite Population um einen Wert zwischen 80 nm und 200 nm zentriert sind, aufweist.

**2.** Zusammensetzung nach Anspruch 1, **dadurch gekennzeichnet, dass** der Durchmesser der ersten Population von Poren um einen Wert zwischen 20 nm und 35 nm und spezieller zwischen 20 nm und 30 nm zentriert ist und der Durchmesser der zweiten Population von Poren um einen Wert zwischen 80 nm und 150 nm und spezieller zwischen 90 nm und 110 nm zentriert ist.

**3.** Zusammensetzung nach Anspruch 1 oder 2, **dadurch gekennzeichnet, dass** sie nach 4 Stunden Calcinierung bei 900°C ein Gesamtporenvolumen von 1,5 ml Hg/g und spezieller von mindestens 1,7 ml Hg/g aufweist.

**4.** Zusammensetzung nach einem der vorhergehenden Ansprüche, **dadurch gekennzeichnet, dass** sie mindestens zwei Oxide von zwei Seltenerdmetallen, die von Cer verschieden sind, enthält und in der es sich bei einem dieser Seltenerdmetalle um Lanthan handelt; dass sie einen Gehalt an Zirconiumoxid von mindestens 60% aufweist und dass sie nach 4 Stunden Calcinierung bei 1000°C in Form von zwei verschiedenen kristallographischen Phasen, von denen mindestens eine kubisch ist, vorliegt.

**5.** Zusammensetzung nach einem der vorhergehenden Ansprüche, **dadurch gekennzeichnet, dass** sie nach 4 Stunden Calcinierung bei 1100°C eine Population von Poren, deren Durchmesser um einen Wert zwischen 30 nm und 70 nm zentriert ist, aufweist.

**6.** Zusammensetzung nach Anspruch 4 oder 5, **dadurch gekennzeichnet, dass** sie nach 4 Stunden Calcinierung bei 1100°C ein Gesamtporenvolumen von mindestens 0,9 ml Hg/g aufweist.

**7.** Zusammensetzung nach einem der vorhergehenden Ansprüche, **dadurch gekennzeichnet, dass** sie einen Gehalt an Ceroxid zwischen 5% und 45% aufweist.

**8.** Zusammensetzung nach einem der vorhergehenden Ansprüche, **dadurch gekennzeichnet, dass** sie einen Gehalt an Oxiden von Seltenerdmetallen, die von Cer verschieden sind, zwischen 10% und 30% aufweist.

**9.** Zusammensetzung nach einem der vorhergehenden Ansprüche, **dadurch gekennzeichnet, dass** sie einen Gehalt an Zirconiumoxid von mindestens 45% aufweist und nach 4 Stunden Calcinierung bei 1100°C eine spezifische Oberfläche von mindestens 25 $m^2$/g aufweist.

**10.** Zusammensetzung nach einem der vorhergehenden Ansprüche, **dadurch gekennzeichnet, dass** sie nach 10 Stunden Calcinierung bei 1150°C eine spezifische Oberfläche von mindestens 7 $m^2$/g und spezieller mindestens 10 $m^2$/g aufweist.

**11.** Verfahren zur Herstellung einer Zusammensetzung nach einem der Ansprüche 1 bis 10, **dadurch gekennzeichnet, dass** es folgende Schritte umfasst:

- (a1) man bildet eine Mischung, die entweder nur Cer- und Zirconiumverbindungen oder diese Verbindungen mit einer oder mehreren Verbindungen von Seltenerdmetallen, die von Cer verschieden sind, in einer Menge dieser letzteren Verbindungen, die kleiner als die zum Erhalt der gewünschten Zusammensetzung erforderliche Menge ist, umfasst;

- (b1) man gibt die Mischung unter Rühren mit einer basischen Verbindung zusammen;
- (c1) man gibt das im vorhergehenden Schritt erhaltene Medium entweder mit der Verbindung bzw. den Verbindungen von Seltenerdmetallen, die von Cer verschieden sind, wenn diese Verbindung bzw. diese Verbindungen nicht im Schritt (a1) vorlag bzw. vorlagen, oder mit der erforderlichen Restmenge der Verbindung bzw. der Verbindungen zusammen, wobei die während Schritt (c1) verwendete Rührenergie kleiner ist als die während Schritt (b1) verwendete Rührenergie, wodurch man einen Niederschlag erhält;
- (d1) man erhitzt den Niederschlag in wässrigem Medium;
- (e1) man versetzt den im vorhergehenden Schritt erhaltenen Niederschlag mit einem aus anionischen Tensiden, nichtionischen Tensiden, Polyethylenglykolen, Carbonsäuren und Carbonsäuresalzen und Tensiden vom Typ carboxymethylierte Fettalkoholethoxylate ausgewählten Additiv;
- (f1) man calciniert den so erhaltenen Niederschlag.

12. Verfahren zur Herstellung einer Zusammensetzung nach einem der Ansprüche 1 bis 10, **dadurch gekennzeichnet, dass** es folgende Schritte umfasst:

- (a2) man bringt Zirconium- und Cerverbindungen in flüssiger Phase mit einer basischen Verbindung zusammen, wodurch sich ein Niederschlag bildet;
- (b2) man erhitzt den Niederschlag in wässrigem Medium;
- (c2) man versetzt den im vorhergehenden Schritt erhaltenen Niederschlag mit einem aus anionischen Tensiden, nichtionisches Tensiden, Polyethylenglykolen, Carbonsäuren und Carbonsäuresalzen und Tensiden vom Typ carboxymethylierte Fettalkoholethoxylate ausgewählten Additiv;
- (d2) man calciniert den Niederschlag aus dem vorhergehenden Schritt bei einer Temperatur von höchstens 500°C;
- (e2) man bildet eine Mischung in flüssiger Phase, die das Produkt aus dem vorhergehenden Schritt und eine oder mehrere Verbindungen von Seltenerdmetallen, die von Cer verschieden sind, umfasst;
- (f2) man bringt diese Mischung mit einer basischen Verbindung zusammen;
- (g2) man erhitzt das feste Produkt aus dem vorhergehenden Schritt in wässrigem Medium;
- (h2) man calciniert das aus dem vorhergehenden Schritt erhaltene Produkt.

13. Verfahren zur Herstellung einer Zusammensetzung nach einem der Ansprüche 1 bis 10, **dadurch gekennzeichnet, dass** es folgende Schritte umfasst:

- (a3) man bringt in flüssiger Phase entweder nur Cer- und Zirconiumverbindungen oder diese Verbindungen mit einer oder mehreren Verbindungen von Seltenerdmetallen, die von Cer verschieden sind, in einer Menge dieser letzteren Verbindungen, die kleiner als die zum Erhalt der gewünschten Zusammensetzung erforderliche Menge ist, mit einer basischen Verbindung zusammen;
- (b3) man erhitzt den Niederschlag in wässrigem Medium;
- (c3) man gibt das im vorhergehenden Schritt erhaltene Medium entweder mit der Verbindung bzw. den Verbindungen von Seltenerdmetallen, die von Cer verschieden sind, wenn diese Verbindung bzw. diese Verbindungen nicht im Schritt (a3) vorlag bzw. vorlagen, oder mit der erforderlichen Restmenge der Verbindung bzw. der Verbindungen zusammen;
- (d3) man bringt das im vorhergehenden Schritt erhaltene Medium mit einer basischen Verbindung zusammen;
- (e3) man versetzt den im vorhergehenden Schritt erhaltenen Niederschlag mit einem aus anionischen Tensiden, nichtionisches Tensiden, Polyethylenglykolen, Carbonsäuren und Carbonsäuresalzen und Tensiden vom Typ carboxymethylierte Fettalkoholethoxylate ausgewählten Additiv;
- (f3) man calciniert den so erhaltenen Niederschlag.

14. Verfahren nach einem der Ansprüche 11 bis 13, **dadurch gekennzeichnet, dass** man als Verbindungen von Zirconium, Cer und der anderen Seltenerdmetalle eine aus Nitraten, Sulfaten, Acetaten, Chloriden und Cer(IV)-ammoniumnitrat ausgewählte Verbindung verwendet.

15. Verfahren nach einem der Ansprüche 11 bis 13, **dadurch gekennzeichnet, dass** man das Erhitzen des Niederschlags der Schritte (d1), (b2), (g2) und (b3) bei einer Temperatur von mindestens 100°C durchführt.

16. Katalytisches System, **dadurch gekennzeichnet, dass** es eine Zusammensetzung nach einem der Ansprüche 1 bis 10 umfasst.

17. Verfahren zur Behandlung von Abgasen von Verbrennungsmotoren, **dadurch gekennzeichnet, dass** man als Katalysator ein katalytisches System nach Anspruch 16 oder eine Zusammensetzung nach einem der Ansprüche 1 bis 10 verwendet.

**Claims**

1. Composition containing zirconium oxide, cerium oxide and yttrium oxide or containing zirconium oxide, cerium oxide and at least two oxides of two rare earths other than cerium, in a weight proportion of zirconium oxide of at least 20% and of cerium oxide of at most 70%, **characterized in that** it exhibits, after calcination at a temperature of 900°C for 4 hours, two populations of pores of which the respective diameters are centered, for the first population, about a value of between 20 and 40 nm and, for the second population, about a value of between 80 nm and 200 nm.

2. Composition according to Claim 1, **characterized in that** the diameter of the first population of pores is centered about a value of between 20 nm and 35 nm and more particularly between 20 nm and 30 nm and the diameter of the second population of pores is centered about a value of between 80 nm and 150 nm and more particularly between 90 nm and 110 nm.

3. Composition according to Claim 1 or 2, **characterized in that**, after calcination at a temperature of 900°C for 4 hours, it has a total pore volume of at least 1.5 ml Hg/g, more particularly of at least 1.7 ml Hg/g.

4. Composition according to one of the preceding claims, **characterized in that** it contains at least two oxides of two rare earths other than cerium and in which one of these rare earths is lanthanum, **in that** it has a zirconium oxide content of at least 60% and **in that**, after calcination at 1000°C for 4 hours, it is in the form of two different crystallographic phases, at least one of which is cubic in nature.

5. Composition according to one of the preceding claims, **characterized in that**, after calcination at 1100°C for 4 hours, it exhibits a population of pores of which the diameter is centered about a value of between 30 nm and 70 nm.

6. Composition according to Claim 4 or 5, **characterized in that**, after calcination at 1100°C for 4 hours, it has a total pore volume of at least 0.9 ml Hg/g.

7. Composition according to one of the preceding claims, **characterized in that** it has a cerium oxide content of between 5% and 45%.

8. Composition according to one of the preceding claims, **characterized in that** it has a content of oxides of rare earths other than cerium of between 10% and 30%.

9. Composition according to one of the preceding claims, **characterized in that** it has a zirconium oxide content of at least 45% and, after calcination at 1100°C for 4 hours, a specific surface area of at least 25 $m^2$/g.

10. Composition according to one of the preceding claims, **characterized in that**, after calcination at 1150°C for 10 hours, it has a specific surface area of at least 7 $m^2$/g, more particularly of at least 10 $m^2$/g.

11. Process for preparing a composition according to one of Claims 1 to 10, **characterized in that** it comprises the following steps:

    - (a1) a mixture is formed comprising either zirconium and cerium compounds only or these compounds with one or more compounds of rare earths other than cerium, in an amount of the latter compounds which is less than the amount required to obtain the desired composition;
    - (b1) said mixture is brought together with a basic compound, with stirring;
    - (c1) the medium obtained in the preceding step is brought together, with stirring, with either the compound(s) of rare earths other than cerium if this or these compound(s) was (were) not present in step (a1), or the required remaining amount of said compound(s), the stirring energy used during step (c1) being less than that used during step (b1), as a result of which a precipitate is obtained;
    - (d1) said precipitate is heated in an aqueous medium;
    - (e1) an additive selected from anionic surfactants, nonionic surfactants, polyethylene glycols, carboxylic acids and their salts and surfactants of the carboxymethylated fatty alcohol ethoxylate type is added to the precipitate obtained in the preceding step;

- (f1) the resulting precipitate is calcined.

12. Process for preparing a composition according to one of Claims 1 to 10, **characterized in that** it comprises the following steps:

- (a2) zirconium and cerium compounds are brought together, in liquid phase, with a basic compound, as a result of which a precipitate is formed;
- (b2) said precipitate is heated in an aqueous medium;
- (c2) an additive selected from anionic surfactants, nonionic surfactants, polyethylene glycols, carboxylic acids and their salts and surfactants of the carboxymethylated fatty alcohol ethoxylate type is added to the precipitate obtained in the preceding step;
- (d2) the precipitate resulting from the preceding step is calcined at a temperature of at most 500°C;
- (e2) a liquid-phase mixture comprising the product resulting from the preceding step and one or more compounds of rare earths other than cerium is formed;
- (f2) this mixture is brought together with a basic compound;
- (g2) the solid product resulting from the preceding step is heated in an aqueous medium;
- (h2) the product obtained at the end of the preceding step is calcined.

13. Process for preparing a composition according to one of Claims 1 to 10, **characterized in that** it comprises the following steps:

- (a3) either zirconium and cerium compounds only, or these compounds with one or more compounds of rare earths other than cerium in an amount of the latter compound(s) which is less than the amount required to obtain the desired composition, are brought together, in liquid phase, with a basic compound, as a result of which a precipitate is formed;
- (b3) said precipitate is heated in an aqueous medium;
- (c3) the medium obtained in the preceding step is brought together with either one or more compounds of rare earths other than cerium, if these compounds were not present in step (a3), or the required remaining amount of said compounds;
- (d3) the medium obtained in the preceding step is brought together with a basic compound;
- (e3) an additive selected from anionic surfactants, nonionic surfactants, polyethylene glycols, carboxylic acids and their salts and surfactants of the carboxymethylated fatty alcohol ethoxylate type is added to the precipitate obtained in the preceding step;
- (f3) the resulting precipitate is calcined.

14. Process according to one of Claims 11 to 13, **characterized in that** a compound selected from the nitrates, sulfates, acetates, chlorides and ceric ammonium nitrate is used as zirconium compounds, cerium compounds and compounds of the other rare earths.

15. Process according to one of Claims 11 to 13, **characterized in that** the heating of the precipitate in steps (d1), (b2), (g2) and (b3) is carried out at a temperature of at least 100°C.

16. Catalytic system, **characterized in that** it comprises a composition according to one of Claims 1 to 10.

17. Process for processing the exhaust gases from internal combustion engines, **characterized in that** use is made, as catalyst, of a catalytic system according to Claim 16 or a composition according to one of Claims 1 to 10.

Figure 1

**EP 2 566 617 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2570087 A

- WO 9845212 A

**Littérature non-brevet citée dans la description**

- **BRUNAUER - EMMETT- TELLER.** *The Journal of the American Chemical Society,* 1938, vol. 60, 309